# EUROPÄISCHE PATENTANMELDUNG

(11) **EP 1 248 071 A2**
(43) Veröffentlichungstag der Anmeldung: **09.10.2002**
(21) Anmeldenummer: 02007623.8
(22) Anmeldetag: 04.04.2002
(51) Int. Cl.: G01B 11/27

(54) **Vorrichtung zur quantitativen Beurteilung der räumlichen Lage zweier Maschinenteile, Werkstücke oder anderer Gegenstände relativ zueinander**

(30) Priorität: 06.04.2001 DE 10117390
(71) Anmelder: Prüftechnik Dieter Busch AG, 85737 Ismaning (DE)
(72) Erfinder: Busch, Dieter, 85737 Ismaning (DE); Hermann, Michael, 78052 Villingen-Schwennigen (DE)

(57) **Zusammenfassung**

Die Erfindung dient zur qualitativen oder quantitativen Bestimmung der räumlichen Lage zweier Körper relativ zueinander. Sie kann z.B. dazu dienen, die gegenseitige Lage zweier Körper nach zumindest angularen Koordinaten zu bestimmen.

Eine erfindungsgemäße Vorrichtung weist folgende Komponenten auf:
a) eine einen gebündelten Lichtstrahl aussendende Vorrichtung
b) ein erstes optisches System mit einer Mehrzahl anteilig reflektierender Flächen, oder mit einer einzigen Fläche mit teilreflektierenden Eigenschaften. Das erste optische System ist darüberhinaus zur Aufweitung des gebündelten Lichtstrahles in mindestens eine Ebene geeignet.
c) ein zweites optisches System in Form einer (oder mehrerer) anteilig oder teilreflektierenden Fläche(n),
d) einen oder mehrere optoelektronische Sensoren zur direkten oder indirekten Bestimmung von Auftreffpunkten des in mindestens eine Ebene aufgeweiteten Lichtstrahles auf eine Target-Fläche.

## Beschreibung

Die Erfindung bezieht sich auf ein Verfahren und zugehörige Vorrichtungen zur quantitativen Beurteilung der räumlichen Positionierung und Orientation zweier Maschinen oder Maschinenteile relativ zueinander, wie zum Beispiel Wellen, Werkzeugmaschinenspindeln, Werkstücken oder anderen physischen Gegenständen. Die Erfindung ist ebenfalls dazu geeignet, die Planparallelität von zwei Oberflächen solcher Gegenstände zueinander zu überprüfen, oder die Ausrichtung von zwei zueinander auszurichtenden zylindrischen Objekten an solchen Gegenständen quantitativ zu vermessen oder zu beurteilen, wie dies beispielsweise für Wellen, Rohre, Pipelines und dergleichen der Fall sein kann.

Verfahren und Vorrichtungen ähnlicher Art sind seit mehreren Jahren in Gebrauch und zeichnen sich dadurch aus, dass durch ihre Anwendung enorm Arbeitszeit eingespart werden kann.

Eine Vorrichtung mit vergleichsweise wenig Systemkomponenten zur Beurteilung der Planparallelität speziell von Riemenscheiben ist aus der WO 00 28257 bekannt.

Darüerhinaus ist neben den in der DE 3473344.2-08 und der EP 0183811 genannten Verfahren und Vorrichtungen ist in diesem Zusammenhang auf die Lehre der DE 38 14 466 und der DE 199 23 116 hinzuweisen.

In den beiden zuletzt genannten Schriften wird dargestellt, wie die fluchtende Lage zweier Maschinenteile, insbesondere zweier miteinander zu verbindender Wellen, oder der Ausrichtung zwischen einer Maschinenspindel und einem Werkstück, unter Verwendung einer einzigen strahlerzeugenden Lichtquelle überprüft, vermessen und beurteilt werden kann.

Die bekannten Vorrichtungen und Verfahren sehen häufig Präzisionsteile und -komponenten vor, teilweise auch kostenintensive optische Bauteile, und ermöglichen auf diese Weise präzise und zuverlässige Messungen. Da wie erwähnt die Vorteile der bekannten Systeme erheblich sind, werden die z.T. relativ hohen Gestehungskosten dieser metrologischen Geräte von der Mehrzahl der potentiellen Anwender akzeptiert.

Es ist Aufgabe der Erfindung, die bekannten Verfahren und Vorrichtungen geräteseitig derart zu verbessern, daß signifikant niedrigere Herstellungskosten für ein solches Gerät realisiert werden können. Damit wird deren Einsatz auch in solchen Anwendungsfällen möglich wird, wo dies aus Kostengründen bisher entweder nicht in Frage kam oder allenfalls zögernd akzeptiert wurde.

Mit einer erfindungsgemäßen Vorrichtung kann überprüft bzw. quantitativ ausgemessen werden:
- translatorischer Versatz zwischen zwei zu vermessenden Gegenständen nach bis zu zwei Richtungen des Raumes, z.B. horizontal und vertikal
- winkelmäßiger Versatz zwischen zwei zu vermessenden Gegenständen, nach bis zu drei Winkelkoordinaten im Raum, z.B. Azimut und Elevation sowie Rollwinkel.

Zur Lösung des genannten Problems wird vorgesehen:
- eine einen Lichtstrahl, insbesondere einen Laserstrahl aussendende Einrichtung
- eine erste Kombination optischer Elemente, enthaltend ein teilweise reflektives Element und ein Element zur Erzeugung eines Lichtbandes oder mehrerer einzelner Teilstrahlen
- eine zweite Kombination optischer Elemente, enthaltend ein teilweise reflektives Element. Die Erfindung ist daher geeignet, eine qualitative oder quantitative Bestimmung der räumlichen Lage zweier Körper relativ zueinander, bezüglich translatorischer und/oder angularer Koordinatensysteme durchzuführen, und beruht entsprechend auf der Verwendung folgender Komponenten:

- eine einen gebündelten Lichtstrahl aussendende Vorrichtung,
- ein erstes optisches System mit einer Mehhzahl anteilig reflektierender Flächen, oder mit einer einzigen Fläche mit teilreflektierenden Eigenschaften, wobei das optische System zur Aufweitung des gebündelten Lichtstrahles in mindestens eine Ebene geeignet ist,
- ein zweites optisches System in Form einer oder mehrerer anteilig oder teilreflektierenden Flächen,
- einen oder mehrere optoelektronische Sensoren zur direkten oder indirekten Bestimmung von Auftreffpunkten des in mindestens eine Ebene aufgeweiteten Lichtstrahles.

Ein erfindungsgemäßes Gerät zeichnet sich bei Verwendung planer reflektierender optischer Elemente durch besonders günstige Gestehungskosten aus. Es können aber auch gekrümmte Flächen für solche reflektierenden optischen Elemente vorgesehen werden.

Zur Erzeugung eines aufgefächterten, in einer Ebene liegenden Lichtstrahles oder -bandes wird entweder eine Zylinderlinse vorgesehen oder, bevorzugt, ein Diffraktionsgitter in Form eines Strichgitters. Das Diffraktionsgitter kann aber auch in einer zusätzlichen zweiten oder weiteren Ebene wirksam sein und besitzt dann eine entsprechende Oberlächenstruktur.

Für das erste optische System gemäß der Erfindung wird weiterhin ein teildurchlässiger Reflektor (Spiegel) oder ein mit einer Mehrzahl einzelner Aperturen versehenes vollständig reflektierendes optisches Element vorgesehen.

Für das zweite optische System gemäß der Erfindung wird entweder ein einstückig ausgeführter teildurchlässiger Reflektor (Spiegel), oder ein mit mehreren Aperturen versehenes vollständig reflektierendes optisches Element verwendet. Bei Bedarf kann das zweite optische System mit einem oder mehreren Projektionsschirmen versehen sein, speziell in der Form einer für Streulicht transparenten Streu- oder Mattscheibe.

Dem zweiten optischen System zugeordnet ist ein optoelektronischer Sensor, der zumindest einachsig auslesbar ist, bevorzugt jedoch zweiachsig auslesbar ist. Durch einen solchen wird zumindest ein analoges elektrisches Ausgangssignal bereitgestellt, so dass der Auftreffort eines Lichtstrahles auf diesen Sensor identifiziert werden kann. Bevorzugt wird ein pixelorientiertes Ausgangssignal zur Verfügung gestellt, so daß mehr als ein Auftreffort von Lichtstrahlen auf dem Sensor identifiziert werden kann.

Bevorzugt wird das erste optische System in einem ersten Gehäuse und das zweite optische System samt optoelektronischem Sensor in einem zweiten Gehäuse angebracht. Diese Gehäuse sind bevorzugt so geformt, daß sie leicht an zu untersuchende Objekte wie Maschinen, Maschinenteile, Werkstücke usw. angelegt werden können, so daß eine Lagemessung von zwei Objekten relativ zueinander durchgeführt werden kann. Die Resultate einer solchen Lagemessung können in einem nachfolgenden Schritt mittels eines zugehörigen Verfahrens dazu herangezogen werden, die Position von fehlerhaft zueinander ausgerichteten Objekten entweder zu dokumentieren, oder zu korrigieren.

Gemäß der Erfindung ist es möglich, mit relativ kostengünstigen Mitteln ein metrologisches Instrument zur Verfügung zu stellen, welches die Lagemessung zweier Objekte zueinander nach bis zu drei translatorischen Koordinaten und nach bis zu drei winkelmäßigen Koordinaten gestattet. Von besonderem Vorteil ist die hohe Auflösung eines erfindungsgemäßen Systems hinsichtlich zweier von drei Winkelkoordinaten.

Gemäß der Erfindung können neben den optischen Systemen auch Hilfs-Meßgeräte vorhanden sein, wie etwa in Form zusätzlicher Inclinometer oder Wasserwaagen.

### Die Erfindung wird im folgenden anhand der Zeichnung erläutert. Es zeigt:

- Fig. 1: ein perspektivische Ansicht von der Seite auf eine Vorrichtung mit zwei Einheiten, die in separaten Gehäusen angeordnet sind
- Fig. 2: in einer Aufsicht die Wirkungsweise des zweiten optischen Systems
- Fig. 3: in einer Grundrißdarstellung ein Strahlengang-Beispiel

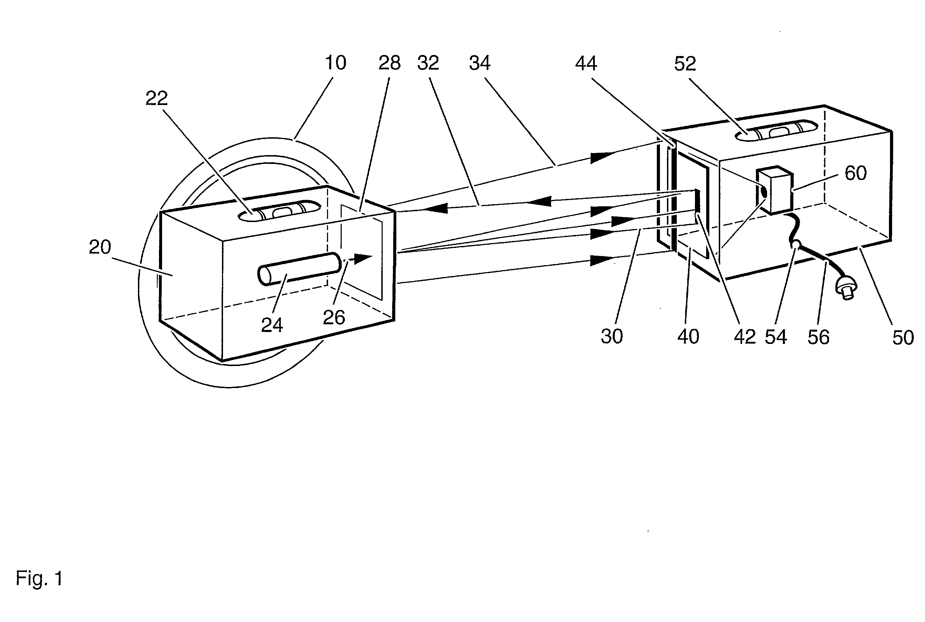

Wie in Fig. 1 gezeigt, kann ein metrologisches System gemäß der Erfindung ein zwei separaten Gehäusen 20, 50 untergebracht sein. Die Seitenflächen der Gehäuse sind so ausgestaltet, daß ein Anlegen an die zu vermessenden Objekte in einfacher Weise, aber mit hoher Präzision durchgeführt werden kann. Ein solches Objekt 10 kann zum Beispiel eine Riemenscheibe sein, oder aber eine Motorwelle, ein Werkzeug oder Werkstück, eine komplette Maschine, oder ein Fahrzeug.

Eine Vorab-Ausrichtung des Gehäuses relativ zu einer Horizontalrichtung kann mittels einer optional vorhandenen Wasserwaage 22 durchgeführt werden. - Innerhalb des Gehäuses 20 befindet sich eine Vorrichtung 24 zur Erzeugung eines zentriert ausgerichteten und schmal ausgeblendeten Lichtstrahles 26, speziell eines Laserstrahles, wie in der Fig. gezeigt. Der Lichtstrahl 26 fällt auf ein erstes optisches Element 28 und wird in zumindest eine Ebene aufgeweitet. Hierzu dient wahlweise eine Zylinderlinse, oder, bevorzugt, ein Diffraktionsgitter, insbesondere in Form eines Hologramms. Weiterhin enthält das erste optische Element 28 reflektierend wirkende Vorrichtungen. Hierzu ist entweder ein teildurchlässiger Spiegel vorgesehen, oder ein im wesentlichen vollständig reflektierender Spiegel, welcher jedoch eine Mehrzahl an Aperturen aufweist. Mit besonderem Vorteil wird aus den Aperturen gleichzeitig das genannte Diffraktionsgitter gebildet, so daß ein gleichzeitig strahlaufweitendes und reflektierendes optisches Element zur Verfügung gestellt wird. Der aufgeweitete Lichtstrahl 30 tritt aus dem Gehäuse 20 aus und definiert beispielsweise in Form eines Lichtbandes eine einzige Ebene. Bei Verwendung eines einfachen Diffraktionsgitters besteht der Lichtstrahl 30 aus einzeln unterscheidbaren, in einer Ebene nebeneinanderliegenden Lichtstrahlen. Deren Abstand voneinander nimmt mit wachsender Entfernung vom Gehäuse 20 kontinuierlich und in linearer Weise zu. Alle Einzelstrahlen aus dem Lichtstrahl 30 treffen als primärer Lichtfleck 42 auf einem optischen System 40 auf. Dieses ist teilreflektierend und spiegelt somit einen Anteil des auftreffenden Lichtes als Lichtstrahlen 32 in Richtung des Gehäuses 20 und des optischen Elementes 28 zurück. Aufgrund der reflektierenden Eigenschaften des optischen Elementes 28 wird ein Teil des dorthin zurückgesendeten Lichtes erneut gespiegelt, und zwar als Lichtstrahlen 34. Diese fallen wiederum auf das optische System 40 auf und erzeugen dort den sekundären Lichtfleck 44. Dieser ist, genaue so wie der primäre Lichtfleck 42, von bevorzugt linienförmiger Gestalt. Sofern die Längsachsen der Gehäuse 20, 50 exakt koinzidieren, befinden sich beide Lichtflecken 42, 44 in zentrierter Lage auf dem optischen Element 40. Sie können dort zumindest durch ihre unterschiedliche Intensität, ggf. auch durch ihre Dimension voneinander unterschieden werden. Sind die genannten Gehäuseachsen translatorisch beabstandet oder winkelmäßig abweichend, so ergibt dies eine entsprechende Kombination an Projektionslagen der Lichtflecken 42, 44. Bei Verwendung eines Diffraktionsgitters oder Hologramm zur Aufweitung des Strahles 26 kann ein zentral liegender Teilstrahl sowohl im Lichtstrahl 30 als auch in dessen reflektierten Anteilen bereitgestellt werden, so daß aus der genannten Kombination an Projektionslagen der Lichtflecken auf dem optischen System 40 die räumliche Orientierung der Gehäuse 20, 50 zueinander abgeleitet werden kann. Dies gilt zunächst für zwei translatorische Koordinaten und drei angulare Koordinaten, denn durch die Richtung des primären Lichtflecks 42 in Bezug zu den Kanten des optischen Systems 40 kann auch die Drehlage der Gehäuse zueinander bezüglich deren Längsachse festgestellt werden. Darüberhinaus kann auch eine Entfernung der Gehäuse zueinander festgestellt werden, sofern der Lichtstrahl 30 sich aus unterscheidbaren Einzelstrahlen zusammensetzt oder zumindest eine definierte Kontur aufweist. Dies ergibt sich aus den sog. Strahlensätzen, denn der Lichtfleck 42 wird um so größer projiziert erscheinen, je weiter die Gehäuse 20, 50 voneinander beabstandet sind. Es sei betont, daß durch die zweifache Reflexion des Lichtstrahles 30 eine relativ genaue Winkelmessung der Gehäuse zueinander erreicht wird, und im Prinzip eine Steigerung dieser Genauigkeit durch weitere Reflexionsvorgänge herbeigeführt werden kann.

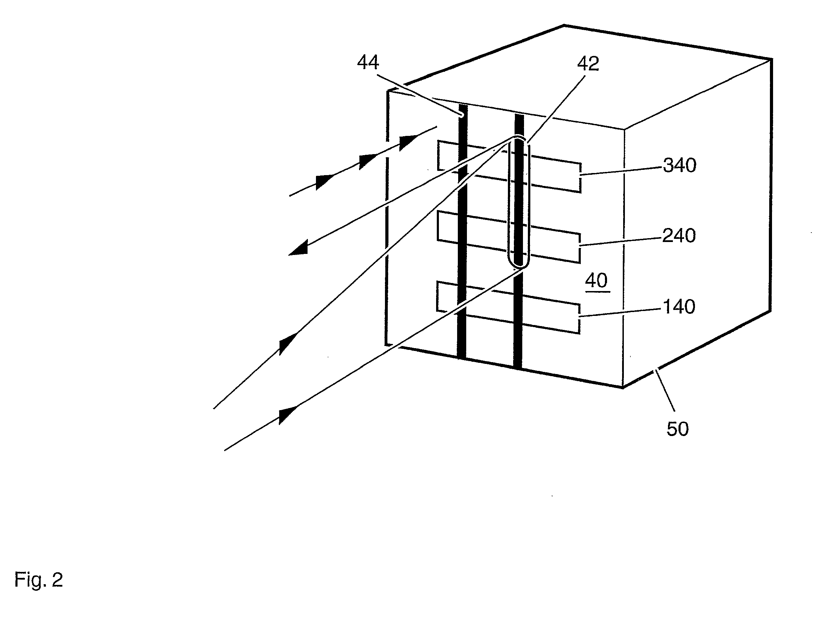

Die Ausrichtung der Gehäuse 20, 50 kann qualitativ und visuell vorgenommen werden, wenn das optische Element sowohl spiegelnde als auch Streulicht reflektierend Anteile aufweist. Zur quantitativen Bestimmung der Lage der Gehäuse, und damit der zu vermessenden Gegenstände, zueinander, werden geeignete optoelektronische Sensoren vorgesehen. Diese schliessen sich an das optische System 40 an, welches dementsprechend entweder eine Anzahl Aperturen aufweist, so daß Teile des primären (42) und des sekundären (44) Lichtflecks hindurchtreten können und in z.B. direkter Weise auf einen solchen Sensor auftreffen. Anstelle der Aperturen (c.f Fig. 2) kann aber auch vorgesehen werden, daß das optische System 40 einen teilreflektierenden, z.B. halbdurchlässigen Spiegel enthält. - Es wird jedoch bevorzugt eine indirekte Messung durchgeführt. Hierzu wird das optische System 40 auf seiner Rückseite mit einem für Streulicht durchlässigen Projektionsschirm (Mattscheibe) versehen, auf welchem der primäre und der sekundäre Lichtfleck (42, 44) abgebildet werden. Diese werden mittels einer geeigneten abbildenden Optik auf z.B. das lichtempfindliche Element in Form eines CCD- oder CMOS-Sensors einer miniaturisierten elektronischen Kamera 60 projiziert, welche somit die gesuchten Meßwerte in indirekter Form als elektronische Signale bereitstellt. Mit dieser Methode ist es möglich, die unterschiedlichen Lichtflecken oder Anteile von diesen anhand ihrer Intensität oder ggf. Farbe zu identifizieren und zu vermessen. Einer solchen Kamera 60 wird ein Computer (nicht gezeigt) per Anschlußmittel 54, 56 nachgeschaltet, welcher aufgrund der beobachteten Lichtverteilungen die interessierenden Abstände und Winkelversatzmaße der Gehäuse relativ zueinander errechnet. Der Computer kann die von der Kamera 60 registrierten Lichtverhältnisse auch ohne größere Modifikation auf einem Sichtschirm abbilden, so daß eine Bedienperson die registrierten Lichtverhältnisse zu Kontrollzwecken bequem inspizieren kann. Weiterhin kann der Computer numerische Angaben liefern und die genauen translatorischen und angularen Versatzmaße anzeigen. Weiterhin kann der Computer Vorschläge berechnen, wie beobachteter translatorischer und/oder angularer Versatz zwischen den Objekten durch geeignete Justiermaßnahmen am besten behoben werden können. - Auch das Gehäuse 50 kann bedarfsweise mit einem Inclinometer oder einer Wasserwaage 52 ausgestattet sein.

In Fig. 2 wird die als Beispiel zu verstehende Lage des primären Lichtfleckes 42 sowie des sekundären Lichtfleckes 44 ausgewiesen. Ein Anteil des auf das optische Element 40 auftreffenden Lichtes wird in der gezeigten Ausführungsform durch schlitzförmige Aperturen 140, 240, 340 auf die zugehörige Streuscheibe oder einen direkt nachgeschalteten optoelektronischen Sensor (nicht gezeigt) hindurchgelassen, der Rest wird durch die spiegelnden Oberflächen-Anteile zur Reflexion gebracht. Während die Genauigkeit der Vorrichtung zur Bestimmung der translatorischen Versatzmaße im wesentlichen unabhängig von dem gegenseitigen Abstand der Gehäuse 20, 50 ist, steigt die Empfindlichkeit zur Bestimmung von angularem Versatz offensichtlich bei wachsendem gegenseitigem Abstand.

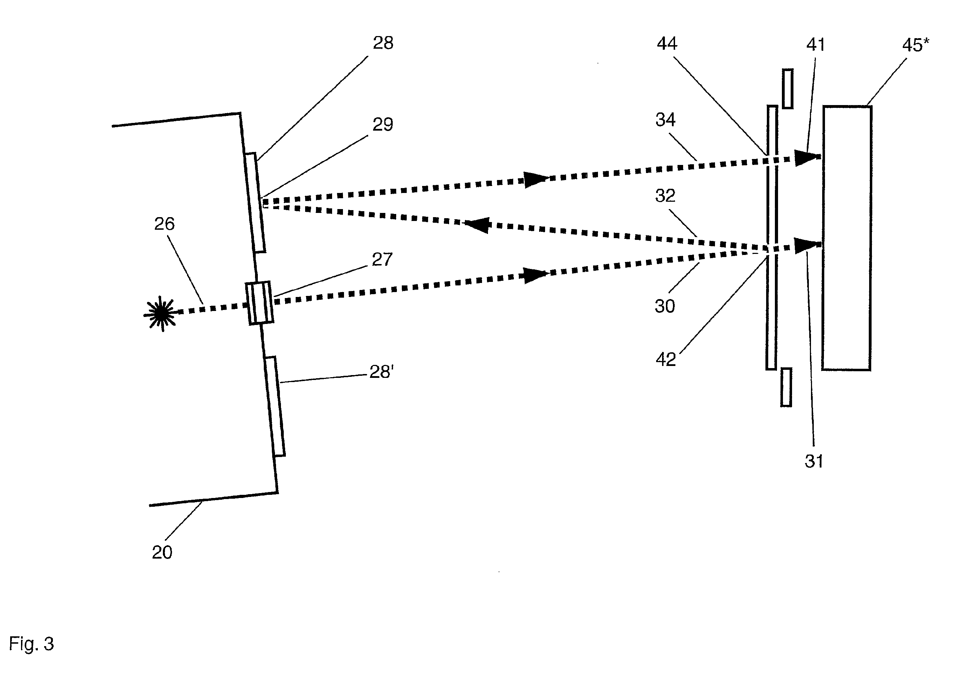

Dieser Sachverhalt geht deutlicher aus Fig. 3 hervor. Lichtstrahl 26 wird durch eine Zylinderlinse 27 senkrecht zur Zeichnungsebene aufgeweitet und ergibt das flache Lichtband 30, welches den primären Lichtfleck 42 erzeugt. Dieser wird anteilig als Lichtband 32 reflektiert und anteilig als Teilstrahl 31 durchgelassen. Teilstrahl 31 trüb auf das Funktionselement 45*, bei welchem es sich entweder direkt um einen optoelektronischen Sensor handeln kann, oder aber um eine bereits erwähnte für Streulicht durchlässige Streuoder Mattscheibe. Gleiches gilt für den Teilstrahl 41, der durch die jeweils reflektierten Teilstrahlen 32, 34 entsteht. (Der Teilstrahl 32 wird dabei mittels des reflektierenden Elements 28, 28' als Strahl 34 reflektiert und bildet dann den sekundären Leuchtfleck 44).

In einer nicht weiter gezeigten Ausführungsform der Erfindung wird die Genauigkeit der Messung nach 3 + 3 Koordinatenachsen dadurch gesteigert, daß anstelle eines im wesentlichen flächigen Lichtbandes 30 eine zweidimensionale verteilte Lichtstrahlen-Schar verwendet wird, wie sie durch ein zweidimensional wirkendes Beugungsgitter erzeugt werden kann. Für die einzelnen Lichtstrahlen einer solchen Strahlen-Schar gelten aber praktisch die gleichen Abbildungs-Gesetze wie für die einzelnen Strahlen im Lichtband 30.

## Patentansprüche

1. Vorrichtung zur qualitativen oder quantitativen Bestimmung der räumlichen Lage zweier Körper relativ zueinander, bezüglich translatorischer und/oder angularer Koordinatensysteme, enthaltend:
- eine einen gebündelten Lichtstrahl aussendende Vorrichtung
- ein erstes optisches System mit einer Mehrzahl anteilig reflektierender Flächen, oder mit einer einzigen Fläche mit teilreflektierenden Eigenschaften, wobei das optische System zur Aufweitung des gebündelten Lichtstrahles in mindestens eine Ebene geeignet ist
- ein zweites optisches System in Form einer oder mehrerer anteilig oder teilreflektierenden Flächen,
- einen oder mehrere optoelektronische Sensoren zur direkten oder indirekten Bestimmung von Auftreffpunkten des in mindestens eine Ebene aufgeweiteten Lichtstrahles

2. Vorrichtung nach Anspruch 1, **dadurch gekennzeichnet, daß** das erste optische System enthält:
- eine Zylinderlinse oder ein zumindest in eine Ebene wirksames Diffraktionsgitter
- einen teildurchlässigen Reflektor (Spiegel) oder einen mit einer Mehrzahl einzelner Aperturen versehenen vollständig reflektierendes optisches Element (Spiegel)

3. Vorrichtung nach Anspruch 1, **dadurch gekennzeichnet, daß** das zweite optische System enthält:
- einen einstückig ausgeführten teildurchlässigen Reflektor (Spiegel), oder einen mit mehreren Aperturen versehenes vollständig reflektierendes optisches Element

4. Vorrichtung nach Anspruch 3, **dadurch gekennzeichnet, daß** das zweite optische System zusätzlich einen oder mehrere Projektionsschirme enthält

5. Vorrichtung nach einem der vorhergehenden Ansprüche, **dadurch gekennzeichnet, daß** der optoelektronische Sensor zumindest einachsig auslesbar ist und geeignet ist, entweder ein analoges oder ein pixelbasiertes Ausgangssignal zur Verfügung zu stellen.

6. Vorrichtung nach einem der vorhergehenden Ansprüche, **dadurch gekennzeichnet, daß** die vollständig oder teilweise reflektierenden Flächen einer Ebene zuzuordnen sind.

7. Vorrichtung nach einem der vorhergehenden Ansprüche, **dadurch gekennzeichnet, daß** eine oder mehrere der vollständig oder teilweise reflektierenden optischen Elemente eine zylindrische, sphärische oder anders gekrümmte Oberfläche aufspannen.
